## Europäisches Patentamt
## European Patent Office
## Office européen des brevets

(19)

(11) Veröffentlichungsnummer: **0 255 619 B1**

(12)     # EUROPÄISCHE PATENTSCHRIFT

(45) Veröffentlichungstag der Patentschrift: **25.09.91**

(51) Int. Cl.⁵: **G01N 29/00**

(21) Anmeldenummer: **87109907.3**

(22) Anmeldetag: **09.07.87**

(54) **Gerät zum Messen und zur zerstörungsfreien Werkstoffprüfung an verlegten Rohrleitungen.**

(30) Priorität: **06.08.86 DE 3626646**

(43) Veröffentlichungstag der Anmeldung:
**10.02.88 Patentblatt 88/06**

(45) Bekanntmachung des Hinweises auf die
Patenterteilung:
**25.09.91 Patentblatt 91/39**

(84) Benannte Vertragsstaaten:
**AT BE CH ES FR GB GR IT LI NL SE**

(56) Entgegenhaltungen:
**WO-A-80/01842        GB-A- 939 172
US-A- 3 586 967        US-A- 3 786 684
US-A- 4 098 126        US-A- 4 646 787**

(73) Patentinhaber: **Pipetronix GmbH
Haid- und Neu-Strasse 7
W-7500 Karlsruhe 1(DE)**

Patentinhaber: **KERNFORSCHUNGSZENTRUM
KARLSRUHE GMBH
Weberstrasse 5 Postfach 3640
W-7500 Karlsruhe 1(DE)**

(72) Erfinder: **Goedecke, Hartmut
Amselweg 8
W-6290 Weilburg(DE)**

(74) Vertreter: **Dr.-Ing. Hans Lichti Dipl.-Ing. Heiner
Lichti Dipl.-Phys. Dr. Jost Lempert
Postfach 41 07 60 Durlacher Strasse 31
W-7500 Karlsruhe 41(DE)**

## Beschreibung

Die Erfindung betrifft ein Gerät zum Messen und zur zerstörungsfreien Werkstoffprüfung an verlegten Rohrleitungen in Form eines durch die Rohrleitung bewegten und an deren Innenwandung geführten Molchs, der wenigstens einen kreisförmigen Träger mit an dessen Umfang angeordneten Meßsensoren und wenigstens ein druckfestes Gehäuse aufweist, das Einrichtungen für die Meßwertverarbeitung und -aufzeichnung sowie für die Stromversorgung aufnimmt.

Geräte solchen Aufbaus, die auch als intelligente Molche bezeichnet werden, werden in Fernleitungen, insbesondere für den Öl- und Gastransport, in zunehmenden Maße zum Detektieren von Fehlern an der Rohrleitung eingesetzt. Sie werden in der Regel mittels des Transportmediums durch die Rohrleitung bewegt und nehmen dabei Messungen unterschiedlicher Art vor. Am häufigsten geht es darum, Messungen an der Rohrwand vorzunehmen, um beispielsweise lokale Korrosionen, Wandstärkenschwächungen durch mechanische Beschädigungen, Lochfraß oder dergleichen festzustellen. Je nach Aufgabenstellung werden unterschiedlich arbeitende Sensoren, z.B. elektro-optische, Ultraschall-Sensoren oder dergleichen eingesetzt.

Ein derartiger Molch ist aus der US-A-4098126 bekannt, die einen napfförmigen, elastischen Träger offenbart, an dessen Enden Sensoren angebracht sind, die mit Hilfe einer Feder direkt an die Rohrinnenwand gedrückt werden.

Um ferner die Rohrwandung über den gesamten Umfang abzutasten, sind die Sensoren auf einem starren Ring (US-PS 4 022 055) angeordnet, wobei der Ring und damit auch die Sensoren einen größeren Abstand von der Rohrwandung aufweisen müssen, um nicht durch Unrundheiten des Rohrs oder durch lokale Beulen beschädigt zu werden. Durch den großen Abstand der Wirkflächen der Sensoren von der Rohrwandung leidet die Meßgenauigkeit. Auch kommt es bei Unrundheiten und Beulen zu einer Verfälschung des Meßergebnisses aufgrund der dort andersartigen Abstandsverhältnisse. Es sind weiterhin rotierende Träger für die Sensoren bekannt (DE-OS 2 156 434, US-PS 3 539 915), die jedoch aufgrund der Rotationsbewegung eine Quelle zusätzlicher Funktionsstörung bilden. Hinzu kommt, daß die Sensoren über komplizierte mechanische Anlenkungen, Gestänge etc. mit dem rotierenden Träger verbunden sind, die dafür sorgen sollen, daß die Sensoren in gleichbleibenden Abstand von der Rohrinnenwand geführt sind. Diese mechanischen Mittel beeinträchtigen die Funktionssicherheit zusätzlich. Im übrigen ist auch hier ein gleichbleibender Abstand zwischen Wirkfläche des Sensors und der Rohrwandung nur bedingt gewährleistet. In allen Fällen ist vor allem die Winkellage des Sensors zur Rohrwandung, die stets senkrecht sein sollte, nicht gewährleistet, insbesondere bei Ovalitäten oder einzelnen Beulen an der Rohrleitung. Ferner ist ein flächendeckendes Abtasten nicht oder nur mit sehr großem Aufwand möglich, so daß Defekte von kleiner lokaler Begrenzung unter Umständen gar nicht festgestellt werden können.

Der Erfindung liegt die Aufgabe zugrunde, ein Gerät von einfachem und funktionssicherem Aufbau zu schaffen, bei dem einerseits der Abstand der Sensoren von der Rohrwandung relativ klein und für alle Sensoren gleich groß ist, andererseits weder der Abstand, noch die Winkellage der Sensoren zur Rohrwandung durch Unrundheiten der Rohrwandung verändert werden.

Diese Aufgabe wird erfindungsgemäß dadurch gelöst, daß der Träger als zylindrische Manschette aus einem gummielastischen Werkstoff ausgebildet und mit einem in Axial-, Radial- und Umfangsrichtung regelmäßigen Profil versehen ist, dessen Erhebungen auf einer zylindrischen Hüllfläche mit einem gegenüber dem Innendurchmesser der Rohrleitung etwas größeren Außendurchmesser liegen und in dessen Senken die Sensoren auf einer zur Hüllfläche konzentrischen Fläche angeordnet sind.

Mit der Erfindung wird ein Sensor-Träger in Form einer Manschette aus einem Werkstoff mit gummielastischen Eigenschaften vorgeschlagen, der sich infolgedessen an die Rohrwandung, insbesondere auch an Unebenheiten anpassen kann. In der entspannten Ausgangslage weist die Manschette bzw. die Hüllfläche der Profilerhebungen einen etwas größeren Außendurchmesser als der Innendurchmesser der Rohrleitung auf. Beim Einsetzen in die Rohrleitung wird die Manschette in Umfangsrichtung etwas zusammengedrückt, so daß sich die Profil-Erhebungen der Rohrwandung satt anlegen, wobei die Anlage auch bei Ovalitäten, Beulen oder sonstigen Unrundheiten der Rohrleitung gewährleistet ist. Die Sensoren sitzen demgegenüber in den Profil-Senken auf einer zur Hüllfläche konzentrischen Fläche, weisen somit also gleichen und definierten Abstand, wie auch gleiche und definierte Winkellage zur Rohrwandung auf. Da die Manschette und damit auch die Profil-Senken eventuellen Unrundheiten des Rohrs folgen, bleiben auch an diesen Stellen Abstand und Winkellage der Sensoren zur Rohrwandung gleich. Somit ist über die gesamte Meßstrecke eine einwandfreie Funktion der Sensoren gewährleistet. Gegenüber den bekannten Molchen mit abstandsveränderlich geführten Sensoren ist von entscheidendem Vorteil, daß das erfindungsgemäße Gerät keine bewegten Teile und keine mechanischen Übertragungsglieder aufweist, so daß ein in hohem Maß funktionssicheres Gerät geschaffen ist,was beim Arbeiten innerhalb der Rohrleitung über große Strecken von ganz entscheidender Bedeutung ist.

In bevorzugter Ausführung sind die Erhebungen und die Senken streifenförmig mit einer im wesentlichen achsparallelen Erstreckung ausgebildet. Die Manschette weist somit im Querschnitt ein Profil auf, das ihr eine gute reversible Verformbarkeit in Umfangsrichtung verleiht, andererseits durch seine im wesentlichen achsparallele Erstreckung keine nennenswerte Erhöhung des Widerstandes in Bewegungsrichtung des Molchs verursacht.

Mit Vorteil sind die Senken von Nuten in der zylindrischen Manschette gebildet, wobei diese vorzugsweise auch im Bereich der Erhebungen innenseitig im wesentlichen achsparallel verlaufende Nuten aufweist. Damit weist die Manschette in Umfangsrichtung eine Art Zieharmonika-Profil auf, das einerseits die reversible Verformbarkeit weiter begünstigt, andererseits die radial auf die Manschette wirkenden Kräfte vornehmlich in Umfangsrichtung umlenkt, so daß solche radialen Kräfte im wesentlichen zu einer Verringerung oder Vergrößerung des Durchmessers führen. Damit ist zugleich gewährleistet, daß die Sensoren stets ihren Abstand und ihre Winkellage zur Rohrwandung beibehalten. Durch dieses Profil ist die Verformbarkeit der Manschette auch in Längsrichtung gegeben, so daß sie sich insgesamt radial und axial erstreckenden Unrundheiten in der Rohrleitung gut anpaßt.

Das Profil kann im Bereich der Erhebungen, wie auch der Senken eine relativ große Wandstärke aufweisen, um außenseitig dem durch die Führung in der Rohrleitung zwangsläufig auftretenden Verschleiß vorzubeugen und innenseitig eine ausreichende Tragfähigkeit zur Aufnahme der Sensoren zu besitzen. Hingegen können die im wesentlichen radial verlaufenden Wandstege zwischen den Erhebungen und den Senken relativ dünnwandig sein und damit die Verformbarkeit weiter begünstigen.

Statt der im Bereich der streifenförmigen Erhebungen innenseitig vorgesehenen Nuten kann die Manschette im Bereich der streifenförmigen Erhebungen auch mit einem engen Raster von Löchern kleinen Durchmessers versehen sein, so daß die Manschette in diesem Bereich eine erhöhte Quer-Kompressibilität besitzt. Sie kann im Bereich der Erhebungen quasi "atmen" und insbesondere in Umfangsrichtung nachgeben, während das Profil im Bereich der streifenförmigen Senken formstabil ist.

In bevorzugter Ausführung der Erfindung sind die Erhebungen und die nutenförmigen Senken unter einem spitzen Winkel zur Achse der Manschette angeordnet. Werden in diesen Nuten mehrere Sensoren hintereinander angeordnet, so ergibt sich zwischen den Sensoren ein Versatz in Umfangsrichtung, so daß von den in einer Nut angeordneten Sensoren ein Flächenstreifen an der Rohrwandung überstrichen wird, der breiter ist als die Wirkfläche des einzelnen Sensors.

Vorzugsweise ist der Winkel zwischen der Erstreckungsrichtung der nutenförmigen Senken und der Achse der Manschette so bemessen, daß sich die Wirkflächen der in der Senke hintereinander angeordneten Sensoren - in Achsrichtung gesehen - einander überlappen. Dadurch ist ein flächendeckendes Abtasten bzw. Messen an der Rohrwandung möglich.

Dem gleichen Zweck dient die weitere Maßnahme, wonach die Länge der nutenförmigen Senken so bemessen ist, daß sich die Wirkflächen des letzten Sensors in der einen Senke und des ersten Sensors in der benachbarten Senke einander überlappen. Die für eine flächendeckende Prüfung der Rohrleitung notwendige Länge der nutenförmigen Senken und damit die Länge der Manschette, wird in erster Linie durch die Größe des Winkels, unter dem die Senken gegenüber der Achsrichtung angestellt sind, bestimmt.

Um die Sensoren zu positionieren,weist die Manschette zur Innenseite offene Gewindebuchsen zum Einschrauben der Sensoren auf, die mit Vorteil an dem die nutenförmigen Senken bildenden Materialstreifen der Manschette zwischen den die Sensoren aufnehmenden Löchern angeordnet sind.

In weiterer Ausgestaltung der Erfindung ist die Manschette an ihrem in Bewegungsrichtung des Molchs vorlaufenden Ende konisch nach innen zu einem Tragflansch eingezogen, mittels dessen sie an dem Molch festgelegt ist. Die konische eingezogene Stirnseite führt die Manschette über eventuelle Hindernisse in der Rohrleitung hinweg.

Das erfindungsgemäß ausgebildete Gerät wird gemäß einem weiteren Merkmal der Erfindung dadurch optimiert, daß die Manschette über ein zentrisches kardanisches Gelenk mit dem Molch verbunden ist, wobei vorzugsweise die Manschette am in Bewegungsrichtung nachlaufenden Ende des Molchs angehängt ist. Durch diese Ausbildung wird das Gerät von dem Molch gezogen - ähnlich einem Farzeug-Einachshänger- wobei die Manschette aufgrund der kardanischen Anlenkung in Rohrkrümmungen der Rohrwandung anliegend folgt und die Winkelabweichung zwischen Rohrachse und Manschettenachse auf einem Minimum gehalten wird. Dabei ist in vorteilhafter Ausgestaltung vorgesehen, daß das kardanische Gelenk mit geringem Abstand hinter den am nachlaufenden Ende des Molchs vorgesehen, der Rohrwand anliegenden Führungsrollen angeordnet ist.

Vorzugsweise sind zwischen dem kardanischen Gelenk und dem Tragflansch der Manschette mehrere um die Achse verteilt angeordnete, an beiden Enden sphärisch gelagerte Zugstangen angeordnet. Mit dieser Ausbildung bleibt die Manschette auch in ihrem Tragflansch flexibel und kann insgesamt Ovalitäten im Rohr behinderungsfrei nachgeben, zudem kann sich die Manschette ständig selbst zentrieren, ohne durch die Bewegungen des Molchs aus der Rohrachse gedrückt zu werden.

Gemäß einem zweckmäßigen Ausführungsbeispiel sind die Zugstangen an ihrem dem Molch zugekehrtem Ende an einer Zwischenplatte sphärisch gelagert, die ihrerseits das kardanische Gelenk aufweist.

Schließlich ist vorgesehen, daß die Zugstangen von der Zwischenplatte aus schräg nach außen verlaufen, wobei sie sich vorzugsweise etwa in der Verlängerung des nach innen eingezogenen konischen Abschnitts der Manschette erstrecken. Damit wirken die Zugkräfte in Richtung des konischen Abschnitts der Manschette, wodurch Verformungen im Bereich des Tragflanschs der Manschette vermieden werden.

Nachstehend ist die Erfindung anhand von in der Zeichnung wiedergegebenen Ausführungsbeispielen beschrieben. In der Zeichnung zeigen:

Fig. 1    Eine Seitenansicht einer Ausführungsform des Molchs;

Fig. 2    einen vergrößerten Längsschnitt durch eine Ausführungsform der Manschette;

Fig. 3    einen Schnitt III-III gemäß Figur 2;

Fig. 4    einen Schnitt IV-IV gemäß Figur 2;

Fig. 5    eine Ansicht der Manschette;

Fig. 6    einen Teil- Längsschnitt durch die Manschette in einer Betriebslage;

Fig. 7    eine Teil-Ansicht der Manschette in anderer Ausführung und

Fig. 8    eine vergrößerte Teilansicht des Anschlusses der Manschette an den Molch.

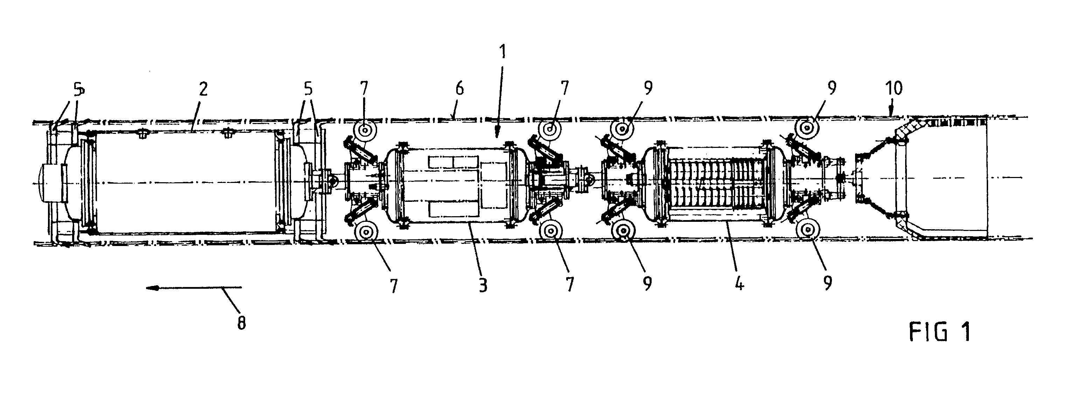

Der Molch 1 weist in der in Figur 1 gezeigten Ausführungsform drei hintereinander angeordnete Molchkörper 2, 3 und 4 mit je einem druckfesten Gehäuse auf. Das Gehäuse des ersten Molchkörpers 2 ist mit mehreren Manschetten 5 versehen,die der Rohrleitung 6 innenseitig dicht anliegen und mit Hilfe des in der Rohrleitung geförderten Mediums für den Vortrieb des Molchs 1 sorgen. In dem Gehäuse des Molchkörpers 2 befinden sich beispielsweise Batterien für die elektrische Versorgung des Geräts. Der zweite Molchkörper 3 ist mit vorderen und hinteren Rollensätzen 7 an der Innenwand der Rohrleitung 6 geführt und nimmt in seinem Gehäuse die Einrichtungen zur Datenverarbeitung und -aufzeichnung auf, während der in Bewegungsrichtung 8 des Geräts letzte Molchkörper 4 in seinem Gehäuse eine Meßelektronik für die nachfolgend beschriebenen Sensoren enthält. Auch dieser Molchkörper ist mit Rollensätzen 9 an der Innenwand der Rohrleitung 6 geführt. Bei dem in Figur 1 gezeigten Ausführungsbeispiel ist am nachlaufenden Ende des Molchs 1 die Manschette 10 mit den Sensoren angehängt.

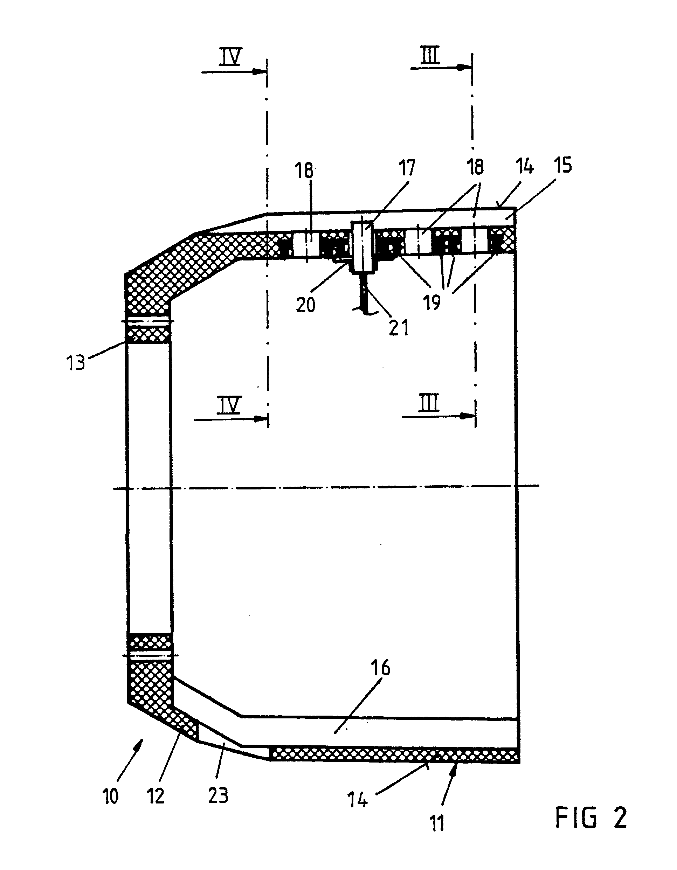

In Figur 2 ist die Manschette 10 aus einem gummielastischen Werkstoff im Längsschnitt erkennbar. Sie weist einen zylindrischen, schlauchförmigen Abschnitt 11 auf, der an seinem in Bewegungsrichtung 8 des Molchs 1 vorlaufenden Ende über einen konischen Abschnitt 12 nach innen eingezogen ist. Der konische Abschnitt 12 geht in einen Tragflansch 13 über, mittels dessen die Manschette 10 an dem Molchs 1 befestigt ist.

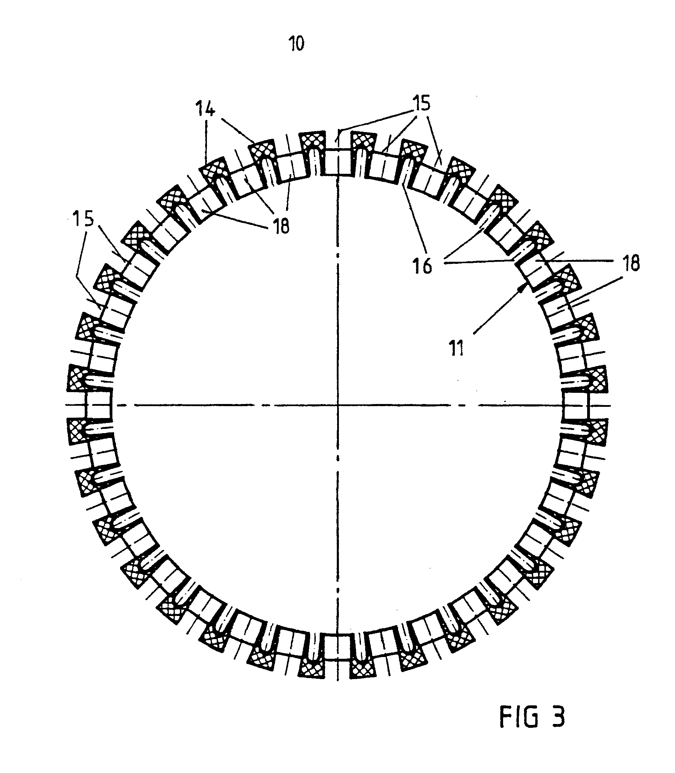

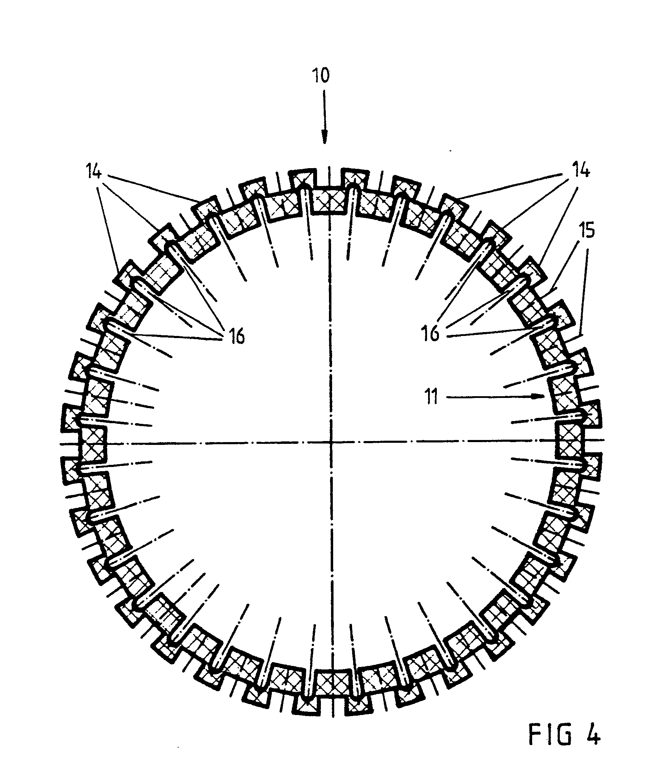

Wie aus Figur 3 und 4 ersichtlich, weist der schlauchförmige Abschnitt 11 der Manschette 10 ein Profil mit Erhebungen 14 und Senken 15 auf, die als nutenförmige Vertiefungen ausgebildet sind. Die Manschette weist ferner auch an ihrer Innenseite jeweils im Bereich der Erhebungen 14 schmalere Nuten 16 auf, so daß in Umfangsrichtung gesehen eine Art Zieharmonika-Profil entsteht. Die Erhebungen 14 liegen auf einer gemeinsamen Hüllfläche, die die Form eines Kreiszylinders aufweist, dessen Außendurchmesser in der entspannten Lage etwas größer ist als der Innendurchmesser der Rohrleitung (Figur 1), so daß nach Einsetzen des Molchs in die Rohrleitung die Manschette 10 etwas zusammengedrückt wird. Dadurch ist sichergestellt, daß sie mit ihren Erhebungen 14 an der Rohrwandung anliegt.

In den Senken 15 sind die für die Messung bzw. zerstörungsfreie Prüfung verwendeten Sensoren 17 angeordnet (Figur 2). Zu diesem Zweck weist die Manschette 10 im Bereich der Senken 15 die Durchgangslöcher 18 auf, in die die Sensoren 17 eingesetzt sind. Zum Fixieren der Sensoren 17 sind im Bereich zwischen den Löchern 18 Gewindebuchsen 19 eingegossen. Die Sensoren 17 sind über Anschlußkabel 21 an die dem druckfesten Gehäuse des Molchkörpers 4 (Figur 1) angeordnete Meßelektronik angeschlossen.

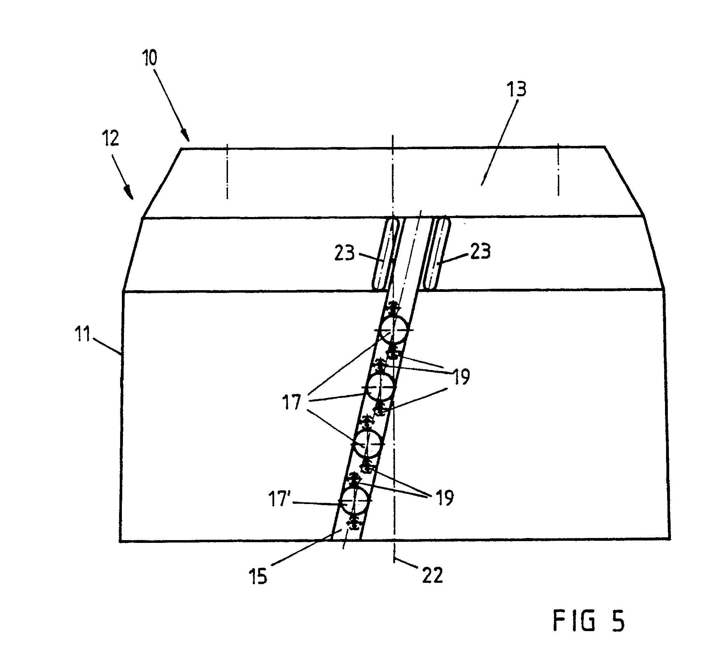

Wie aus Figur 5 ersichtlich ist, sind die Nuten 15 unter einem spitzen Winkel zur Achse 22 der Manschette 10 angeordnet. In jeder Nut 15, von denen in Figur 5 nur eine gezeigt ist, sitzen mehrere Sensoren hintereinander, wobei ihr Abstand so bemessen ist, daß sich ihre Wirkflächen in Achsrichtung gesehen, einander überlappen. Weiterhin ist die Länge der Nut 15 und die Anzahl der Sensoren 17 so ausgelegt, daß sich die Wirkfläche des letzten Sensors in der einen Nut mit der Wirkfläche des ersten Sensors in der benachbarten Nut überlappen, so daß die Wirkflächen der Sensoren die Rohrwandungen vollständig erfassen.

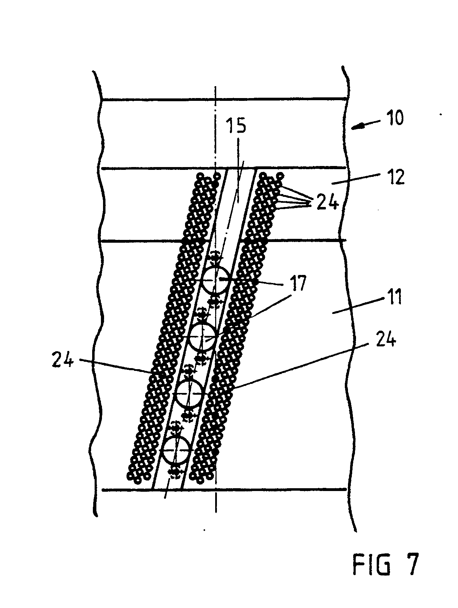

Wie bereits angedeutet, besteht die Manschette zunächst aus einem gummielastischen Werkstoff. Die Verformbarkeit der Manschette wird zusätzlich durch ihr besonderes Profil (Figur 3 und 4) gefördert. Trotz dieser Elastizität der Manschette 10 ist gewährleistet, daß die in den Löchern 18 sitzenden Sensoren 17 mit ihren Wirkflächen auf einer zylindrischen Grundfläche liegen, so daß alle Sensoren den gleichen und stets gleichbleibenden Abstand zur Rohrwandung aufweisen. Um die Elastizität auch im vorderen Bereich sicherzustellen, reichen die außenseitigen Nuten bis in den Bereich des konischen Abschnittes während die innenseitigen Nuten 16 bis zur Innenseite des Tragflanschs 13 verlaufen. Ferner können im Bereich des Übergangs zwischen dem Abschnitt 11 und dem konischen Abschnitt 12 schlitzartige Aussparungen 23 (Figur 2 und 5) vorgesehen sein, die parallel zu den Nuten 15 verlaufen. Eine gegenüber den Figuren 2 bis 4 abgewandelte Ausführung zur Erzielung einer ausreichenden Elastizität der Manschette 10 ist in Figur 7 gezeigt. Hier sind Nuten 15, wie bei der zuvor beschriebenen Ausführungsform vorhanden, während die innenseitigen Nuten 16 (Figur 2 und 3) durch ein enges Raster von Löchern 24 kleinen Durchmessers ersetzt sind. Auch hierdurch kann die Manschette 10 in Umfangsrichtung komprimiert und expandiert werden.

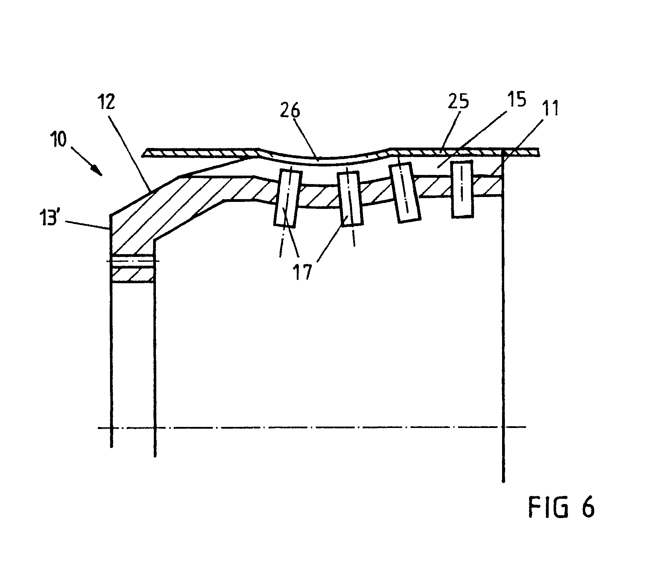

Die sich aus den Eigenschaften des Werkstoffes und der Profilierung ergebende Elastizität der Manschette 10, ist nicht nur in Umfangsrichtung, sondern auch in Längsrichtung vorhanden. Dadurch paßt sich die Manschette 10 sowohl in Umfangs- als auch in Axialrichtung der Rohrwandung an, wie dies insbesondere in Figur 6 angedeutet ist, wo die Rohrwandung 25 eine Beule 26 oder eine ringförmige Verengung aufweist. Die Manschette 10 wird an der entsprechenden Stelle eingedrückt bzw. eingeschnürt, wobei dennoch gewährleistet ist, daß die Sensoren 17 gegenüber dem verformten Wandungsabschnitt 26 den gleichen Abstand und die gleiche Winkellage beibehalten.

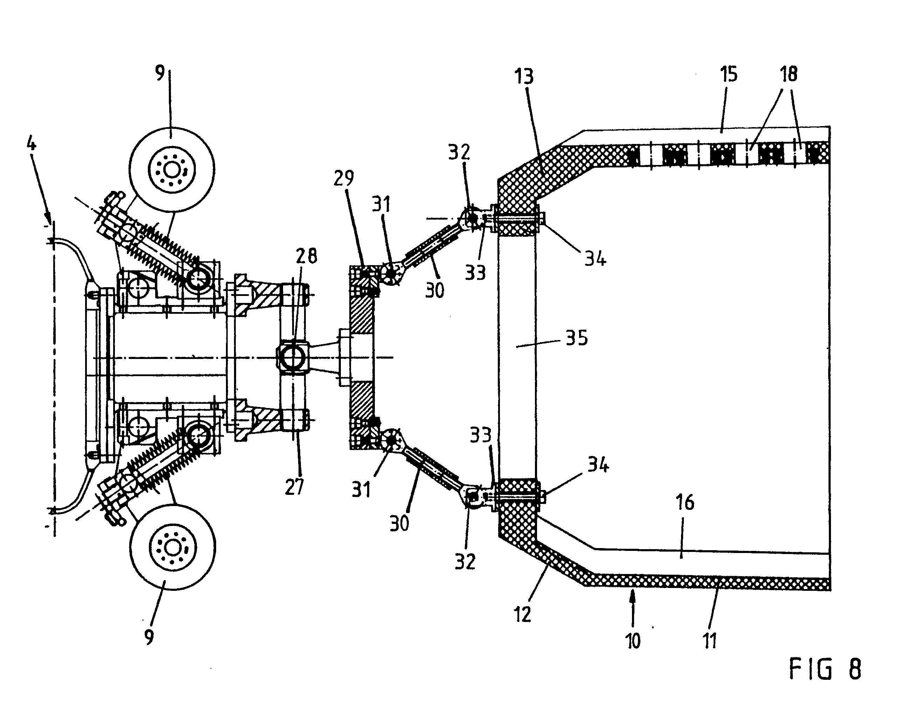

In Figur 8 ist die Ankopplung der Manschette 10 an den letzten Molchkörper 4 näher gezeigt. Dieser weist nahe den letzten Führungsrollensatz 9 eine Tragplatte 27 auf. An die Tragplatte 27 ist über ein Kardangelenk 28 eine Zwischenplatte 29 angekoppelt. An die Zwischenplatte 29 ist die Manschette 10 über Zugstangen 30 angehängt, die an ihren beiden Enden über Kugelgelenke 31 und 32 an der Zwischenplatte 29 bzw. an Lagerböcken 33, die am Tragflansch 13 der Manschette 10 mittels Steckbolzen 34 befestigt sind, angelenkt sind. Die Manschette 10 weist schließlich im Zentrum des Tragflansches 13 eine großflächige Aussparung 35 auf, um das geförderte Medium frei durchströmen zu lassen.

Wie aus Figur 8 ersichtlich, sind die Zugstangen 30 schräg angeordnet, und zwar vorzugsweise derart, daß sie etwa in der durch den konischen Abschnitt 12 der Manschette 10 bestimmten Kegelfläche oder parallel dazu liegen.

**Patentansprüche**

1. Gerät zum Messen und zur zerstörungsfreien Werkstoffprüfung an verlegten Rohrleitungen in Form eines durch die Rohrleitung bewegten und an deren Innenwandung geführten Molchs, der wenigstens einen kreisförmigen Träger mit an dessen Umfang angeordneten Meßsensoren und wenigstens ein druckfestes Gehäuse aufweist, das Einrichtungen für die Meßwertverarbeitung und -aufzeichnung sowie für die Stromversorgung aufnimmt, dadurch gekennzeichnet, daß der Träger als zylindrische Manschette (10) aus einem gummielastischen Werkstoff ausgebildet und mit einem in Axial-, Radial- und Umfangsrichtung regelmäßigen Profil versehen ist, dessen Erhebungen(14) auf einer zylindrischen Hüllfläche mit einem gegenüber dem Innendurchmesser der Rohrleitung etwas größeren Außendurchmesser liegen und in dessen Senken (15) die Sensoren (17) auf einer zur Hüllfläche konzentrischen Fläche angeordnet sind.

2. Gerät nach Anspruch 1, dadurch gekennzeichnet, daß die Senken von Nuten (15) in der zylindrischen Manschette (10) gebildet sind.

3. Gerät nach einem der Ansprüche 1 und 2, dadurch gekennzeichnet, daß die Manschette (10) im Bereich der streifenförmigen Erhebungen (14) mit einem engen Raster von Löchern (24) kleinen Durchmessers versehen ist.

4. Gerät nach einem der Ansprüche 1 bis 3, dadurch gekennzeichnet, daß die Erhebungen (14) und die Senken (15) streifenförmig mit einer im wesentlichen achsparallelen Erstreckung ausgebildet sind.

5. Gerät nach Anspruch 4, dadurch gekennzeichnet, daß die zylindrische Manschette (10) im Bereich der Erhebungen (14) innenseitig gleichfalls im wesentlichen achsparallel verlaufende Nuten (16) aufweist.

6. Gerät nach einem der Ansprüche 1 bis 3, dadurch gekennzeichnet, daß die Erhebungen (14) und die nutenförmigen Senken (15) unter einem spitzen Winkel zur Achse (22) der Manschette (10) verlaufen.

7. Gerät nach einem der Ansprüche 1 bis 3 und 6, dadurch gekennzeichnet, daß der Winkel zwischen der Erstreckungsrichtung der nutenförmigen Senken (15) und der Achse (22) der Manschette (10) so bemessen ist, daß die Wirkflächen der in der Senke hintereinander angeordneten Sensoren (17) in Achsrichtung gesehen einander überlappen.

8. Gerät nach einem der Ansprüche 1 bis 3, 6 oder 7, dadurch gekennzeichnet, daß die Länge der nutenförmigen Senken (15) so bemessen ist, daß sich die Wirkflächen des letzten Sensors (17 ) in der einen Senke (15) und des ersten Sensors in der benachbarten Senke einander überlappen.

9. Gerät nach einem der Ansprüche 1 bis 8, dadurch gekennzeichnet, daß die Manschette (10) zur Innenseite offene Gewindebuchsen (19) zum Festlegen der Sensoren (17) aufweist.

10. Gerät nach einem der Ansprüche 1 bis 9, dadurch gekennzeichnet, daß die Gewindebuchsen (19) in dem die nutenförmigen Senken (15) bildenden Materialstreifen der Manschette (10) zwischen den die Sensoren (17) aufnehmenden Löchern (18) angeordnet sind.

11. Gerät nach einem der Ansprüche 1 bis 10, dadurch gekennzeichnet, daß die Manschette (10) an ihrem in Bewegungsrichtung des Molchs (1) vorlaufenden Enden konisch nach innen zu einem Tragflansch (13) eingezogen ist, mittels dessen sie an dem Molch festgelegt ist.

12. Gerät, insbesondere nach einem der Ansprüche 1 bis 11, dadurch gekennzeichnet, daß die Manschette (10) über ein zentrisches, kardanisches Gelenk (28) mit dem Molch (1) verbunden ist.

13. Gerät nach Anspruch 12, dadurch gekennzeichnet, daß die Manschette (10) am in Bewegungsrichtung nachlaufenden Ende des Molchs (1) angehängt ist.

14. Gerät nach Anspruch 12 oder 13, dadurch gekennzeichnet, daß das kardanische Gelenk (28) mit geringem Abstand hinter den am nachlaufenden Ende des Molchs (1) vorgesehenen, der Rohrwand anliegenden Führungsrollen (9) angeordnet ist.

15. Gerät nach einem der Ansprüche 1 bis 14, dadurch gekennzeichnet, daß zwischen dem kardanischen Gelenk (28) und dem Tragflansch (13) der Manschette (10) mehrere um die Achse verteilt angeordnete, an beiden Enden sphärisch gelagerte Zugstangen (30) angeordnet sind.

16. Gerät nach einem der Ansprüche 1 bis 15, dadurch gekennzeichnet, daß die Zugstangen (30 ) an ihren dem Molch (1) zugekehrtem Ende an einer Zwischenplatte (29) sphärisch gelagert sind, die ihrerseits das kardanische Gelenk (28) aufweist.

17. Gerät nach einem der Ansprüche 1 bis 16, dadurch gekennzeichnet, daß die Zugstangen (30 ) von der Zwischenplatte (29) aus schräg nach außen verlaufen.

18. Gerät nach einem der Ansprüche 1 bis 17, dadurch gekennzeichnet, daß die schräg verlaufenden Zugstangen (30) sich etwa in der Verlängerung des nach innen eingezogenen konischen Abschnittes (12) der Manschette (10) erstrecken.

## Claims

1. Apparatus for measuring and the non-destructive material testing of laid pipelines in the form of a scraper moved through the pipeline and guided on its inner circumference and which has at least one circular carrier with sensors arranged on its circumference and at least one pressure-tight casing, which receives devices for measured value processing and recording, as well as for power supply purposes, characterized in that the carrier is constructed as a cylindrical sleeve (10) of rubberelastic material and is provided with a regular profile in the axial, radial and circumferential direction, whose protuberances (14) are located on a cylindrical envelope surface with a somewhat larger external diameter than the internal diameter of the pipeline and in whose depressions (15) the sensor (17) are located on a surface concentric to the envelope surface.

2. Apparatus according to claim 1, characterized in that the depressions are formed by grooves (15) in the cylindrical sleeve (10).

3. Apparatus according to either of the claims 1 and 2, characterized in that in the vicinity of the strip-like protuberances (14) the sleeve (10) is provided with a narrow grid of small diameter holes (24).

4. Apparatus according to any one of the claims 1 to 3, characterized in that the protuberances (14) and the depressions (15) are constructed in strip-like manner with a substantially axially parallel extension.

5. Apparatus according to claim 4, characterized in that the cylindrical sleeve (10) is provided in the vicinity of the protuberances (14) and on its inside with substantially axially parallel grooves (16).

6. Apparatus according to any one of the claims 1 to 3, characterized in that the protuberances (14) and the groove-like depressions (15) are at an acute angle to the axis (22) of the sleeve (10).

7. Apparatus according to any one of the claims 1 to 3, and 6, characterized in that the angle between the extension direction of the groove-like depressions (15) and the axis (22) of the sleeve (10) is such that the effective surfaces of the sensors (17) successively arranged in the depression overlap one another in the axial direction.

8. Apparatus according to any one of the claims 1 to 3,6 or 7, characterized in that the length of the groove-like depressions (15) is such that the effective surfaces of the last sensor (17') in one depression (15) and the first sensor of the adjacent depression overlap.

9. Apparatus according to any one of the claims 1 to 8, characterized in that the sleeve (10) has threaded bushes (19) open towards the inside for fixing the sensor (17).

10. Apparatus according to any one of the claims 1 to 9, characterized in that the threaded bushes (19) are located in the material strips of the sleeve (10) forming the groove-like depressions (15) between the holes (18) receiving the sensor (17).

11. Apparatus according to any one of the claims 1 to 10, characterized in that at its leading end in the movement direction of the scraper (1), the sleeve (10) is drawn in conically inwards to a support flange (13) by means of which it is fixed to the scraper.

12. Apparatus, particularly according to any one of the claims 1 to 11, characterized in that the sleeve (10) is connected by means of a central, cardan joint (28) to the scraper (1).

13. Apparatus according to claim 12, characterized in that the sleeve (10) is attached to the trailing end of the scraper (1) in the direction of movement.

14. Apparatus according to claim 12 or 13, characterized in that the cardan joint (28) is positioned at a limited distance behind the guide rollers (9) engaging on the pipe wall and provided at the trailing end of the scraper (1).

15. Apparatus according to any one of the claims 1 to 14, characterized in that between the cardan joint (28) and the support flange (13) of the sleeve (10) are provided a plurality of tie rods (30), spherically mounted at both ends and distributed around the axis.

16. Apparatus according to any one of the claims 1 to 15, characterized in that at their end facing the scraper (1), the tie rods (30) are spherically mounted on an intermediate plate (29), which in turn has the cardan joint (28).

17. Apparatus according to any one of the claims 1 to 16, characterized in that the tie rods (30) slope outwards from the intermediate plate (29).

18. Apparatus according to any one of the claims 1 to 17, characterized in that the sloping tie rods (30) extend roughly in the extension of the inwardly drawn conical portion (12) of the sleeve (10).

**Revendications**

1. Appareil pour la mesure et l'essai non destructif de matériau sur des tuyauteries posées, sous forme d'un écouvillon déplacé à travers la tuyauterie et guidé sur sa paroi interne, comportant au moins un support circulaire muni de capteurs de mesure disposés à sa périphérie et au moins un boîtier résistant à la pression recevant des dispositifs pour le traitement et l'enregistrement des valeurs mesurées, caractérisé en ce que le support est formé par un manchon cylindrique (10) en matière élastomère et présente un profil régulier dans les directions axiale, radiale et circonférentielle, dont les reliefs (14) sont situés sur une surface enveloppante cylindrique ayant un diamètre extérieur légèrement supérieur au diamètre intérieur de la tuyauterie et dans les dépressions (15) duquel sont disposés les capteurs (17) sur une surface concentrique à la surface enveloppante.

2. Appareil selon la revendication 1, caractérisé en ce que les dépressions sont formées par des rainures (15) dans le manchon cylindrique (10).

3. Appareil selon l'une des revendications 1 et 2, caractérisé en ce que le manchon (10) est muni dans la région des reliefs (14) en forme de bande d'un réseau serré de trous (24) de petit diamètre.

4. Appareil selon l'une des revendications 1 à 3, caractérisé en ce que les reliefs (14) et les dépressions (15) sont en forme de bandes dont la direction est sensiblement parallèle à l'axe.

5. Appareil selon la revendication 4, caractérisé en ce que le manchon cylindrique (10) présente intérieurement dans la région des reliefs (14) des rainures (16) s'étendant également sensiblement parallèlement à l'axe.

6. Appareil selon l'une des revendications 1 à 3, caractérisé en ce que les reliefs (14) et les dépressions en forme de rainures (15) s'étendent sous un angle aigu par rapport à l'axe (22) du manchon (10).

7. Appareil selon l'une des revendications 1 à 3 et 6, caractérisé en ce que l'angle entre la direction d'extension des dépressions en forme de rainures (15) et l'axe (22) du manchon (10) est choisi de telle sorte que les surfaces actives des capteurs (17) disposés les uns derrière les autres dans la dépression, comme vu dans la direction axiale, se recouvrent mutuellement.

8. Appareil selon l'une des revendications 1 à 3, 6 et 7, caractérisé en ce que la longueur des dépressions en forme de rainures (15) est choisie de telle sorte que les surfaces actives du dernier capteur (17') dans l'une des dépressions (15) et du premier capteur dans la dépression voisine se recouvrent mutuellement.

9. Appareil selon l'une desrevendications 1 à 8, caractérisé en ce que le manchon (10) comporte des douilles filetées (19) ouvertes vers l'intérieur pour la fixation des capteurs (17).

10. Appareil selon l'une des revendications 1 à 9, caractérisé en ce que les douilles filetées (19) sont disposées dans les bandes de matière du manchon (10) formant les dépressions en forme de rainures (15) entre les trous (18) logeant les capteurs (17).

11. Appareil selon l'une des revendications 1 à 10, caractérisé en ce que le manchon (10) se rétrécit en cône vers l'intérieur à son extrémité avant dans le sens de déplacement de l'écouvillon (1) jusqu'à un flasque-support (13) au moyen duquel il est fixé à l'écouvillon.

12. Appareil, en particulier selon l'une des revendications 1 à 11, caractérisé en ce que le manchon (10) est relié à l'écouvillon (1) par l'intermédiaire d'une articulation à cardan centrale (28).

13. Appareil selon la revendication 12, caractérisé en ce que le manchon (10) est accroché à l'extrémité arrière de l'écouvillon (1) par rapport au sens du mouvement.

14. Appareil selon l'une des revendications 12 et 13, caractérisé en ce que l'articulation à cardan (28) est disposée à faible distance derrière les galets de guidage (9) prévus à l'extrémité arrière de l'écouvillon (1) et s'appuyant sur la paroi tubulaire.

15. Appareil selon l'une des revendications 1 à 14, caractérisé en ce qu'entre l'articulation à cardan (28) et le flasque-support (13) du manchon (10) sont disposées plusieurs barres de traction (30), réparties autour de l'axe et montées dans des paliers sphériques à leurs deux extrémités.

16. Appareil selon l'une des revendications 1 à 15, caractérisé en ce que les barres de traction (30) sont montées par des paliers sphériques à leur extrémité tournée vers l'écouvillon (1) dans une plaque intermédiaire (29) qui comporte pour sa part l'articulation à cardan (28).

17. Appareil selon l'une des revendications 1 à 16, caractérisé en ce que les barres de traction (30) sont disposées obliquement vers l'extérieur à partir de la plaque intermédiaire (29).

18. Appareil selon l'une des revendications 1 à 17, caractérisé en ce que les barres de traction (30) disposées obliquement s'étendent à peu près dans le prolongement de la portion conique (12) rétrécie vers l'intérieur du manchon (10).

FIG 1

EP 0 255 619 B1

FIG 2

FIG 3

FIG 4

FIG 5

FIG 6

FIG 7

FIG 8